# EUROPÄISCHE PATENTANMELDUNG

(11) **EP 3 597 495 A1**
(43) Veröffentlichungstag der Anmeldung: **22.01.2020**
(21) Anmeldenummer: 19186317.4
(22) Anmeldetag: 15.07.2019
(51) Int. Cl.: B60T 13/66, B60T 17/22, F16D 66/02

(54) **VERFAHREN ZUM ÜBERWACHEN EINER BREMSANLAGE EINES SCHIENENFAHRZEUGS**

(30) Priorität: 16.07.2018 DE 102018117127
(71) Anmelder: RailWatch GmbH & Co. KG, 53177 Bonn - Bad Godesberg (DE)
(72) Erfinder: Breuer, Michael, 53177 Bonn (DE)
(74) Vertreter: Michalski Hüttermann & Partner Patentanwälte mbB

(57) **Zusammenfassung**

Die Erfindung betrifft ein Verfahren zum Überwachen einer Bremsanlage (10) eines Schienenfahrzeugs (12), wobei die Bremsanlage (10) wenigstens eine Bremssohle (14) umfasst, die auf eine Radlauffläche (16) wirkt, umfassend die folgenden, durch eine computerbasierte Bremsanlagenüberwachungsvorrichtung (18) ausgeführten Schritte
Aufnehmen wenigstens eines Bildes (20) umfassend die Bremsanlage (10) des Schienenfahrzeugs (12) mit einem Sensorsystem (22),
Ermitteln einer Position (24) der Bremssohle (14) auf dem wenigstens einen Bild (20) und
Ermitteln eines Verschleißzustands der Bremssohle (14) aus dem wenigstens einen Bild (20).

## Beschreibung

### Technisches Gebiet

Die Erfindung betrifft ein Verfahren zum Überwachen einer Bremsanlage eines Schienenfahrzeugs, wobei die Bremsanlage wenigstens eine Bremssohle umfasst, die auf eine Radlauffläche des Schienenfahrzeugs wirkt.

### Hintergrund der Erfindung

Eine Bremsanlage zählt zu sicherheitsrelevanten Komponenten eines Schienenfahrzeugs, weswegen fortlaufend eine Überwachung pneumatischer und mechanischer Teile der Bremsanlage stattfindet. Die Überwachung wird in der Regel über eine manuelle Sichtung der Bremsanlage durch Wartungspersonal durchgeführt, was allerdings zeitaufwändig und kostenintensiv ist.

Aus dem Stand der Technik sind daher verschiedene Vorrichtungen bzw. Verfahren zur automatischen Überwachung von Bremsanlagen bekannt. Beispielsweise beschreibt die DE 10 2008 011 288 A1 eine Vorrichtung zur Überwachung einer Belagsdicke eines Bremsbelags der Bremsanlage eines Fahrzeugs, wobei der Bremsbelag mit einem Reibungspartner wie einer Bremsscheibe zusammenwirkt. Der Bremsbelag ist mit wenigstens einem passiven Transponder eines RFID-Systems versehen. Der passive Transponder wird bei Erreichen einer definierten Verschleißgrenze des Bremsbelags durch Kontakt mit einem Reibungspartner oder mit einem vom Reibungspartner geführten Element derart verändert und/oder zerstört, so dass der Transponder nach Beleuchtung durch ein Lesegerät des RFID-Systems ein gegenüber einem erwarteten Signal verändertes Signal oder kein Signal an das Lesegerät sendet.

Ferner beschreibt die DE 102 33 844 A1 eine Vorrichtung und ein Verfahren zur Überwachung des Funktions- und/oder Verschleißzustandes von Bremsbelägen und Bremsscheiben einer Fahrzeugbremse, insbesondere einer Schienenfahrzeugbremse. In einer ersten Funktionsebene der Vorrichtung findet eine auf Berechnungsmodellen basierende Bestimmung des Verschleißes der Bremsbeläge und des Gesamtverschleißes der Bremsbeläge und der Bremsscheiben statt. Mittels einer in einer nachgelagerten Funktionsebene enthaltenen Auswerteeinrichtung werden abhängig von den Eingangsgrößen Verschleiß der Bremsbeläge und Gesamtverschleiß der Bremsbeläge und der zugeordneten Bremsscheibe als Ausgangsgrößen die aktuelle Belagsstärke der Bremsbeläge und die aktuelle Dicke der zugeordneten Bremsscheibe bestimmt. In die Auswerteeinrichtung ist eine Plausibilitätskontrolle integriert, welche bei nicht plausiblen Ergebnissen ein Fehlersignal erzeugt.

Auch wenn letztgenannte Druckschrift Schienenfahrzeuge betrifft, haben sich die aus dem Stand der Technik bekannten Vorrichtungen und Verfahren nicht bewährt, die Bremsanlage eines Schienenfahrzeugs zuverlässig und kostengünstig zu überwachen.

### Beschreibung der Erfindung

Ausgehend von dieser Situation ist es eine Aufgabe der Erfindung, ein Verfahren und eine entsprechende Vorrichtung zum Überwachen einer Bremsanlage eines Schienenfahrzeugs anzugeben, durch welches besonders zuverlässig und vollautomatisiert ein Verschleißzustand der Bremsanlage eines Schienenfahrzeugs detektierbar ist.

Die Aufgabe wird durch die Gegenstände der unabhängigen Ansprüche gelöst. Bevorzugte Weiterbildungen sind in den Unteransprüchen angegeben.

Demnach wird die Aufgabe durch ein Verfahren zum Überwachen einer Bremsanlage eines Schienenfahrzeugs gelöst, wobei
die Bremsanlage wenigstens eine Bremssohle umfasst, die auf eine Radlauffläche wirkt, umfassend die folgenden, durch eine computerbasierte Bremsanlagenüberwachungsvorrichtung ausgeführten Schritte:
Aufnehmen wenigstens eines Bildes umfassend die Bremsanlage des Schienenfahrzeugs mit einem Sensorsystem,
Ermitteln einer Position der Bremssohle auf dem wenigstens einen Bild und
Ermitteln eines Verschleißzustands der Bremssohle aus dem wenigstens einen Bild.

Ein wesentlicher Aspekt des vorgeschlagenen Verfahrens ist, dass von der Bremsanlage des nicht notwendigerweise stehenden Schienenfahrzeugs insbesondere automatisiert ein Bild aufgenommen wird, aus welchem in der Folge insbesondere ebenso automatisiert der Verschleißzustand der Bremssohle bestimmt wird. Anstatt die Bremsanlage wie im Stand der Technik noch regelmäßig praktiziert manuell und umständlich am in der Regel stehenden Schienenfahrzeug zu überprüfen, erlaubt das Verfahren ein Bestimmen des Verschleißes der Bremsanlage in automatisierter Weise durch die computerbasierte Bremsanlagenüberwachungsvorrichtung. Somit lässt sich durch das vorgeschlagene Verfahren die Überwachung besonders schnell, kostengünstig und zuverlässig realisieren, da die Überwachung und eine damit einhergehende Prüfung der Bremsanlage personenfrei und während einer Vorbeifahrt des insofern fahrenden Schienenfahrzeugs durchgeführt werden kann. Insofern können durch das Verfahren Standzeiten des Schienenfahrzeugs verringert oder, sofern das Überprüfen im Stand durchgeführt wird, aufgrund der Automatisierung reduziert werden.

Das betrachtete Schienenfahrzeug ist ein Fahrzeug, das auf einer oder mehreren Schienen oder Gleisen fährt, wie beispielsweise eine Eisenbahn, ein Güterzug oder eine Straßenbahn. Das Schienenfahrzeug kann aus mehreren, miteinander verbundenen Wagen bestehen, die selbst motorisiert (Lokomotiven, Triebzüge) oder unmotorisiert (Waggons, Anhänger) sein können. Das Schienenfahrzeug weist eine oder eine Mehrzahl, insbesondere einem jedem Rad des Schienenfahrzeugs zugeordnete Bremsanlage auf, um seine Geschwindigkeit zu verringern. Die Bremsanlage befindet sich in der Regel in unmittelbarer Nähe der Räder des Schienenfahrzeugs und/oder ist benachbart zu diesen angeordnet, um auf die Räder einwirken zu können. Die Bremsanlage umfasst insbesondere pneumatische und/oder mechanische Stellglieder wie wenigstens eine Bremssohle, die auf die Radlauffläche des Schienenfahrzeugs wirken.

Die Bremssohle überträgt in der Regel eine Bremskraft von einem Bremszylinder über ein Bremsgestänge auf die Radlauffläche. Konkret wird während eines Bremsvorganges durch Druck der Bremssohle auf die Radlauffläche eine Reibungskraft als Bremskraft erzeugt, die in der Regel am Radumfang tangential angreift und der Drehrichtung des Rades entgegengesetzt ist. Eine insbesondere gleich große Gegenkraft wird als Haftkraft zwischen Rad und Schiene erzeugt, wodurch sich die Geschwindigkeit des Schienenfahrzeugs verringert. Die Reibung führt zu thermischen Belastungen und Reibverschleißen der Bremsanlage. Ferner kann die Reibung und/oder die thermische Belastung zu weiteren Schadformen wie beispielsweise Risse, Ausbröckelungen oder plastische Verformungen an den pneumatischen und/oder mechanischen Stellgliedern der Bremsanlage führen, die in besonders einfacher und sicherer Weise durch das vorgeschlagene Verfahren detektierbar sind. Die Bremssohle kann als Doppelklotzsohle ausgeführt sein und derart 2 Bremsklötze umfassen.

Das Sensorsystem zum Aufnehmen des wenigstens einen Bildes ist bevorzugt als Kamerasystem, als Kamera und/oder als Videokamera ausgeführt. Alternativ oder zusätzlich kann das Sensorsystem andere Sensoren, wie beispielsweise Radar-, Laser- oder Lidarsensoren, umfassen. Das Sensorsystem kann weitere Informationen, wie beispielsweise eine Geschwindigkeit des Schienenfahrzeugs während der Vorbeifahrt an der Bremsanlagenüberwachungsvorrichtung erfassen. Das von dem Sensorsystem aufgenommene Bild ist bevorzugt mit einem Zeitstempel versehen. Die Bremsanlagenüberwachungsvorrichtung umfasst bevorzugt einen Mikroprozessor, durch welchen das Sensorsystem zum Aufnehmen des wenigstens einen Bildes umfassend die Bremsanlage des Schienenfahrzeugs angesteuert wird und durch welchen die Position der Bremssohle auf dem wenigstens einen, aufgenommenen Bild sowie der Verschleißzustand der Bremssohle ermittelt wird. Die Bremsanlagenüberwachungsvorrichtung kann mit einer Software zum Ausführen der Verfahrensschritte versehen sein. Zweckmäßigerweise kann das Bild aufgenommen werden, wenn eine Lichtschranke beispielsweise umfassend einen Laser durch das Schienenfahrzeug unterbrochen wird. Ein Auswählen eines relevanten Bildausschnitts kann durch die Software erfolgen. Beim Aufnehmen des Bildes kann dieses mit einem Zeitstempel einer Achse der Bremssohle versehen werden. Bevorzugt wertet die Software mindestens ein Bild pro Achse aus.

Gemäß einer bevorzugten Weiterbildung umfasst das Verfahren die Schritte: Erfassen eines der Bremsanlage zugeordneten Identifikationskennzeichens, insbesondere einer Wagennummer, und Übermitteln des Identifikationskennzeichens und des wenigstens einen Bildes an einen Speicher und/oder einen Server zum Ermitteln der Position der Bremssohle auf dem wenigstens einen Bild und zum Ermitteln des Verschleißzustands der Bremssohle aus dem wenigstens einen Bild insbesondere durch den Server. Durch Erfassen des Identifikationskennzeichens lässt sich ein Modell bzw. Typ der an dem Schienenfahrzeug verbauten Bremsanlage bestimmen, indem beispielsweise das Identifikationskennzeichen mit einer auf Server laufenden Datenbank abgeglichen wird. Alternativ oder zusätzlich lässt sich durch Erfassen des Identifikationskennzeichens auf einfache Weiseeinen eventuell notwendigen Reparatur- und/oder Austausch der Bremsanlage und/oder ihrer Komponenten vornehmen.

Für die Bestimmung wird bevorzugt ein an dem Schienenfahrzeug bereits vorhandenes Identifikationskennzeichen verwendet, wie beispielsweise eine UIC-Wagennummer, Abkürzung für französisch Union internationale des chemins de fer, Internationaler Eisenbahnverband. Über die vom UIC erstellten Nummerierungssysteme, wie das UIC-Baureihenschema für Triebfahrzeuge, das UIC-Bauart-Bezeichnungssystem für Reisezugwagen, die UIC-Wagennummer, den UIC-Ländercode und das harmonisierte Güterverzeichnis für Transportgüter (NHM), kann eine eindeutige Identifizierung des Schienenfahrzeugs erfolgen.

Das Identifikationskennzeichen kann mittels eines Bildverarbeitungsalgorithmus aus dem erfassten Bild extrahiert werden. Alternativ oder zusätzlich kann die Identifizierung auch über einen Bar- oder Matrixcode, der auf dem Schienenfahrzeug aufgebracht ist, und ein entsprechend ausgestaltetes Lesegerät vorgenommen werden. Des Weiteren sind auch Systeme, die auf einer RFID-Technologie beruhen denkbar. Ein RFID-System (radio-frequency identification) weist einen Transponder auf, der beispielsweise an dem Schienenfahrzeug vorgesehen ist und einen kennzeichnenden Code enthält, sowie ein Lesegerät zum Auslesen des kennzeichnenden Codes. Weiter alternativ oder zusätzlich kann auch eine Identifizierung, die auf Satelliten- oder Mobilfunk-Ortung beruht, verwendet werden. Ebenso ist eine Identifizierung aufgrund von Fahrplaninformationen oder mit einem dem Bild zugeordneten Zeitstempel denkbar. Selbstverständlich können die genannten Varianten einzeln oder in einer beliebigen Kombination miteinander verwendet werden. Bevorzugt erfolgt das Ermitteln der Position der Bremssohle auf dem wenigstens einen Bild und das Ermitteln des Verschleißzustands der Bremssohle aus dem wenigstens einen Bild auf dem Speicher und/oder dem Server. Der Speicher, beispielsweise ein Network Attached Storage, englisch für netzgebundener Speicher, abgekürzt NAS, und/oder ein Server, beispielsweise ein Cloud-Server, verfügen oftmals über eine höhere Speicher- und/oder Rechenkapazität, so dass das Ermitteln der Position der Bremssohle und das Ermitteln des Verschleißzustands der Bremssohle zeitnah, insbesondere in Echtzeit erfolgen kann. Durch diese Weiterbildung wird das Verfahren besonders nutzerfreundlich und robust, insbesondere wenn Speicher und/oder Server redundante Strukturen aufweisen. Zudem kann durch eine auf dem Speicher und/oder dem Server vorhandene Datensicherungseinrichtung die Sicherheit und Verfügbarkeit erfasster Daten gewährleistet werden. Bei einer vorgenannten NAS und/oder Cloud-Implementierung kann ortsunabhängig auf die erfassten Daten und/oder den ermittelten Verschleißzustand zugegriffen werden. Beispielsweise können Werkstätten und andere autorisierte Personenkreise, die an einer eventuellen Reparatur beteiligt sind oder an der Überwachung der Bremsanlage interessiert sind, auf die erfassten Daten und/oder den ermittelten Verschleißzustand zugreifen.

Gemäß einer bevorzugten Weiterbildung umfasst das Ermitteln der Position der Bremssohle auf dem wenigstens einen Bild ein Ermitteln einer Position einer Bremssohlenbefestigungseinrichtung, mittels dessen die Bremssohle insbesondere an dem Schienenfahrzeug befestigt ist. Die Bremssohlenbefestigungseinrichtung kann einen Bolzen, eine Unterlagscheibe, einen Split oder dergleichen umfassen und wird im Folgenden der Einfachheit halber als Bolzen bezeichnet. Die Bremssohlenbefestigungseinrichtung dient als markanter insbesondere durch einen Bildverarbeitungsalgorithmus automatisiert identifizierbarer Referenzpunkt, um auf dem wenigstens einen Bild die Position der Bremssohle zu identifizieren. Insofern kann über die Position der Bremssohlenbefestigungseinrichtung eine Annahme über die Position der Bremssohle getroffen werden. Zum Identifizieren kann in bevorzugter Weiterbildung ein Klassifikator verwendet werden, der auf eine Vielzahl verschiedenartiger Bremssohlenbefestigungseinrichtungen trainiert wurde.

Gemäß einer bevorzugten Weiterbildung umfasst das Ermitteln eines Verschleißzustandes der Bremssohle aus dem wenigstens einen Bild das Ermitteln einer Dicke der Bremssohle. Die Bremssohle wirkt während eines Bremsvorganges auf die Radlauffläche des Schienenfahrzeugs, wodurch die Dicke der Bremssohle im Laufe der Zeit abnimmt. Somit ist die Dicke der Bremssohle ein wichtiges Kriterium, um zu beurteilen, ob eine einwandfreie Funktion der Bremsanlage des Schienenfahrzeugs möglich ist.

Gemäß einer bevorzugten Weiterbildung umfasst das Ermitteln der Dicke der Bremssohle das Bestimmen wenigstens zweier Kanten der Bremssohle und ein Ermitteln des Abstandes zwischen den wenigstens zwei Kanten der Bremssohle. Mit Hilfe eines Kantenerkennungsalgorithmus können die Kanten der Bremssohle identifiziert werden. Die Dicke der Bremssohle wird bevorzugt als Abstand zwischen den identifizierten Kanten ermittelt. Derart lässt sich schnell und zuverlässig die Dicke der Bremssohle bestimmen, um den Verschleißzustand zu erfassen.

Gemäß einer bevorzugten Weiterbildung umfasst das Verfahren den Schritt: Vergleichen der Dicke der Bremssohle mit einem Soll-Wert. Durch diesen Schritt lässt sich eine Aussage über den momentanen Verschleißzustand der Bremssohle machen. In Abhängigkeit des Vergleichsergebnisses kann insbesondere automatisiert durch das Verfahren entschieden werden, ob ein sicheres Betreiben der Bremsanlage möglich ist oder ob die Bremssohle ausgetauscht werden muss.

Gemäß einer bevorzugten Weiterbildung umfasst das Ermitteln eines Verschleißzustandes der Bremssohle ein Ermitteln von Rissen in der Bremssohle. Durch eine thermische Belastung während eines Bremsvorganges kann es in der Bremssohle zu Rissen kommen. Risse in der Bremssohle beeinflussen die Qualität und damit die Lebensdauer der Bremssohle. Eine Weiternutzung einer Bremssohle mit Rissen kann zu Ausbröckelungen an der Bremssohle führen, wodurch ein sicherer Betrieb der Bremsanlage nicht mehr möglich ist. Durch die vorgeschlagene Weiterbildung lässt sich in sicherer Weise erkennen, ob die Bremssohle ausgetauscht und/oder repariert werden muss.

Gemäß einer bevorzugten Weiterbildung der Erfindung umfasst das Verfahren den Schritt: Berechnen einer Trendlinie des Verschleißzustandes der Bremssohle. Das Berechnen einer Trendlinie erlaubt eine Abschätzung, zu welchem Zeitpunkt die entsprechende Bremssohle erneuert oder repariert werden muss. Auf diese Weise kann eine Instandhaltungsplanung erfolgen, wodurch Ausfälle und/oder Standzeiten des Schienenfahrzeugs vermieden und Kosten gesenkt werden können. Für die Berechnung der Trendlinie kann beispielsweise die Dicke der Bremssohle verwendet werden. Ebenfalls ist die Anzahl der ermittelten Risse in der Bremssohle geeignet, um eine Trendlinie zu berechnen. Auch eine Kombination beider Möglichkeiten ist denkbar. In Abhängigkeit der Berechnung kann durch das Verfahren automatisiert ein Zeitpunkt bestimmt werden, an dem die Bremsanlage des Schienenfahrzeugs ausgetauscht und/oder repariert wird.

Gemäß einer bevorzugten Weiterbildung wird das Ermitteln der Position der Bremssohle und das Ermitteln des Verschleißzustands der Bremssohle von einem neuronalen Netzwerk, unterstützt durch künstliche Intelligenz und/oder mittels maschinellen-Lernens durchgeführt. Neuronale Netzwerke, Verfahren der künstlichen Intelligenz und/oder des maschinellen-Lernens erlauben in sicherer und einfacher Weise ein Erkennen von Mustern in Bildern. Experimentell hat sich gezeigt, dass mittels Neuronaler Netzwerke, Verfahren der künstlichen Intelligenz und/oder des maschinellen-Lernens das Ermitteln der Position der Bremssohle auf dem wenigstens einen Bild und das Ermitteln des Verschleißzustands der Bremssohle aus dem wenigstens einen Bild besonders zuverlässig und schnell durchführbar ist. Ein für das neuronale Netzwerk, das Verfahren der künstlichen Intelligenz und/oder des maschinellen-Lernens verwendeter Algorithmus kann in vorteilhafter Weise an einer Mehrzahl unterschiedlicher Bildern von Bremsanlagen trainiert werden, um zu lernen, die Position und den Verschleißzustand der Bremssohle in sicherer Weise zu ermitteln. Mittels des Algorithmus lassen sich ebenso die Kanten der Bremssohle und/oder Risse der Bremsanlage erkennen, um die Dicke und damit den Verschleißzustand der Bremsanalage zu ermitteln. Durch die Verwendung eines solchen Algorithmus kann die Überwachung der Bremsanlage automatisiert und damit kosteneffektiv erfolgen.

Die Aufgabe der Erfindung wird zudem durch eine Bremsanlagenüberwachungsvorrichtung zur Überwachung einer Bremsanlage eines Schienenfahrzeugs mit wenigstens einer Bremssohle gelöst, wobei die Bremssohle auf eine Radlauffläche wirkt, umfassend ein Sensorsystem und eine computerbasierte Auswerteeinrichtung, wobei die Auswerteeinrichtung ausgeführt ist, wenigstens ein Bild umfassend die Bremsanlage des Schienenfahrzeugs mit dem Sensorsystem aufzunehmen, eine Position der Bremssohle auf dem wenigstens einen Bild zu ermitteln und einen Verschleißzustand der Bremssohle der Bremsanlage aus dem wenigstens einen Bild zu ermitteln angegeben.

Zur Ausgestaltung der computerbasierten Auswerteeinrichtung existieren verschiedene Möglichkeiten. Bevorzugt ist die Auswerteeinrichtung so ausgebildet, dass sie mit dem Sensorsystem kommunizieren kann, so dass automatisiert wenigstens ein Bild umfassend die Bremsanlage des Schienenfahrzeugs mit dem Sensorsystem aufgenommen werden kann. Bevorzugt umfasst die Auswerteeinrichtung einen Speicher und/oder einen Server zum Speichern des wenigstens einen Bildes und zum Ermitteln der Position der Bremssohle und das Ermitteln des Verschleißzustands der Bremssohle. Der Speicher und/oder der Server kann als zuvor beschriebenes NAS- oder Cloudsystem ausgeführt sein, so dass ortsunabhängig auf das Bild und/oder den ermittelten Verschleißzustand zugegriffen werden kann. Derart können Werkstätten, die an einer eventuellen Reparatur beteiligt sind, auf das Bild und/oder den ermittelten Verschleißzustand zugreifen.

Die Aufgabe der Erfindung wird ferner durch ein Bremsanlagenüberwachungssystem umfassend die zuvor beschriebene Bremsanlagenüberwachungsvorrichtung und ein Prüfgleis gelöst, wobei das Sensorsystem neben dem Prüfgleis installiert ist. Das Prüfgleis ist bevorzugt ein Abschnitt eines Gleises oder einer Schiene, auf dem das Schienenfahrzeug fahren kann. Die Installation des Sensorsystems neben dem Prüfgleis führt zu einer räumlichen Nähe des Sensorsystems zum Prüfgleis, so dass das Aufnehmen des wenigstens einen Bildes umfassend die Bremsanlage des Schienenfahrzeugs stark vereinfacht wird. Der Begriff neben dem Prüfgleis meint im Rahmen der Erfindung insbesondere einen Abstand, der so ausgelegt ist, dass das Sensorsystem insbesondere während einer Vorbeifahrt oder im Stand des Schienenfahrzeugs das wenigstens eine Bild umfassend die Bremsanlage erfassen kann. Anstelle eines Prüfgleises kann die Bremsanlagenüberwachungsvorrichtung neben einem ,regulären' Gleis installiert sein, so dass im laufenden Betrieb während einer Vorbeifahrt eines mit ,normaler' Geschwindigkeit fahrenden Schienenfahrzeugs der Verschleißzustand der Bremsanlage detektierbar ist.

Gemäß einer bevorzugten Weiterbildung erfasst das Sensorsystem bei Vorbeifahrt des Schienenfahrzeugs automatisiert wenigstens ein Bild umfassend die Bremsanlage des Schienenfahrzeugs. Das Bremsanlagenüberwachungssystem ist bevorzugt derart ausgestaltet, dass das Sensorsystem automatisiert wenigstens ein Bild umfassend die Bremsanlage des Schienenfahrzeugs aufnimmt. Dazu kann es von Vorteil sein, wenn die Bremsanlagenüberwachungsvorrichtung und/oder das Bremsanlagenüberwachungssystem weitere Sensoren aufweist, die beispielsweise das Herannahen des Schienenfahrzeugs und/oder dessen Geschwindigkeit detektieren.

Weitere Ausführungsformen und Vorteile der Bremsanlagenüberwachungsvorrichtung und/oder des Bremsanlagenüberwachungssystems ergeben sich für den Fachmann in Analogie zu dem zuvor beschriebenen Verfahren.

### Kurze Beschreibung der Zeichnungen

Nachfolgend wird die Erfindung unter Bezugnahme auf die anliegende Zeichnung anhand bevorzugter Ausführungsbeispiele näher erläutert.

In der Zeichnung zeigen
- Fig. 1: eine schematische Darstellung eines Bremsanlagenüberwachungssystems gemäß einem bevorzugten Ausführungsbeispiel der Erfindung,
- Fig. 2: eine schematische Darstellung einer Bremsanlage eines Schienenfahrzeugs gemäß einem bevorzugten Ausführungsbeispiel der Erfindung und
- Fig. 3: eine schematische Darstellung eines Bildes einer Bremsanlage, woraus ein Verschleißzustand einer Bremssohle ermittelt wird, gemäß einem bevorzugten Ausführungsbeispiel der Erfindung.

### Detaillierte Beschreibung der Ausführungsbespiele

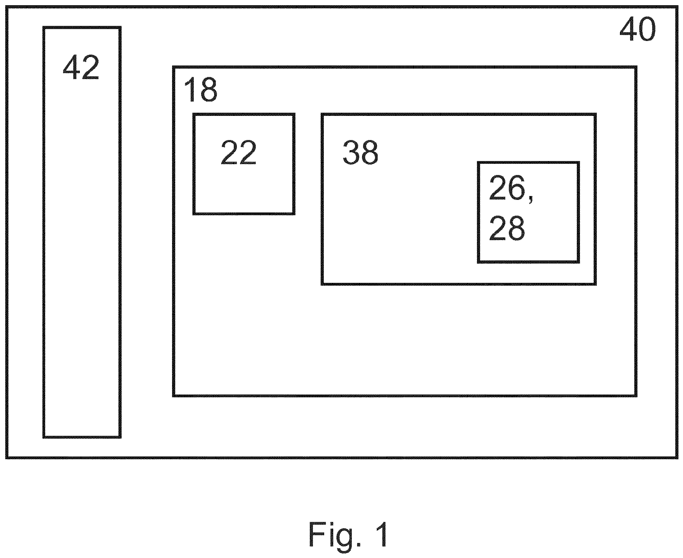

Fig. 1 zeigt ein Bremsanlagenüberwachungssystem 40 gemäß einer bevorzugten Ausführungsform der Erfindung in einer schematischen Ansicht. Das Bremsanlagenüberwachungssystem 40 umfasst ein Prüfgleis 42, worauf ein Schienenfahrzeug 12 fahren kann. Des Weiteren umfasst das Bremsanlagenüberwachungssystem 40 eine Bremsanlagenüberwachungsvorrichtung 18, die ein Sensorsystem 22 aufweist. Das Sensorsystem 22 befindet sich in unmittelbarer Nähe in etwa 2 Meter Abstand neben dem Prüfgleis 42. Die Bremsanlagenüberwachungsvorrichtung 18 umfasst ebenfalls eine Auswerteeinrichtung 38, die einen Speicher 26 und/oder einen Server 28 umfassen kann.

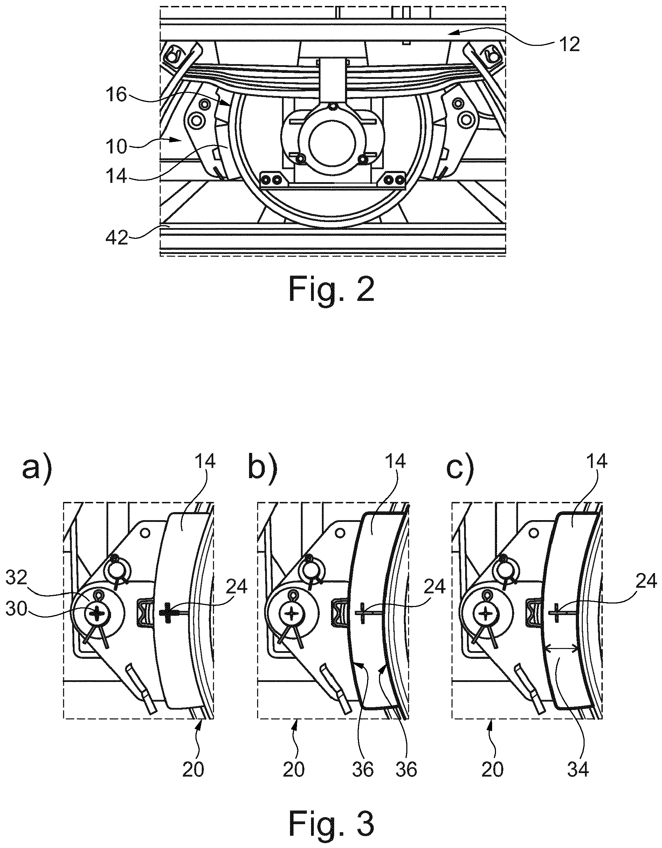

Fig. 2 zeigt eine schematische Darstellung eines Teils des Schienenfahrzeugs 12 auf dem Prüfgleis 42. Das Schienenfahrzeug 12 weist eine Bremsanlage 10 auf, die eine Bremssohle 14 umfasst. Bei einem Bremsvorgang wirkt die Bremssohle 14 auf die Radlauffläche 16 des Schienenfahrzeugs 12. Durch die bei dem Bremsvorgang auftretende Reibung wird die Bremssohle 14 thermisch stark belastet, so dass die Bremssohle 14 einem hohen Verschleiß ausgesetzt ist. Zudem können durch den Bremsvorgang Risse, Ausbröckelungen oder plastische Verformungen an der Bremssohle 14 entstehen.

Um nun den Verschleißzustand der Bremssohle 14 automatisiert zu ermitteln, wird in einem ersten Schritt eines Verfahrens mittels des Sensorsystems 22 ein Bild 20 umfassend die Bremsanlage 10 des Schienenfahrzeugs 12 aufgenommen. Eine schematische Darstellung eines solchen Bildes 20 ist in Fig. 3 gezeigt. Das Sensorsystem 22 umfasst als optisches Kamerasystem eine Hochgeschwindigkeitskamera, damit auch im ,regulären' Betrieb und nicht nur an dem Prüfgleis 42 das Bild 20 der Bremsanlage erfassbar ist.

In einem zweiten Schritt des Verfahrens wird auf dem Bild 20 die Position 30 eines Bolzens 32 ermittelt, womit sich die Position 24 der Bremssohle 14 ermitteln lässt. An dem Bolzen 32 ist ein Bremsschuh und die Bremssohle 14 der Bremsanlage 10 befestigt. Der Bolzen 32 stellt einen definierten Bildpunkt einer jeden Bremsanlage 10 dar, anhand dessen die Position 24 der Bremssohle 14 ermittelbar ist. Dieser Schritt ist schematisch in Fig. 3a) gezeigt.

In einem dritten Schritt des Verfahrens wird der Verschleißzustand der Bremssohle 14 aus dem Bild 20 bestimmt. Dafür werden zwei Kanten 36 der Bremssohle 14 bestimmt. Dies ist exemplarisch in Fig. 3b) gezeigt. Aus dem Abstand zwischen wenigstens zwei Kanten 36 der Bremssohle 14 wird die Dicke 34 der Bremssohle 14 ermittelt, was exemplarisch in Fig. 3c) gezeigt ist. Die ermittelte Dicke 34 wird mit einem Soll-Wert verglichen. Ist der Soll-Wert unterschritten, ist die Bremsanlage 10 und/oder die Bremssohle 14 auszutauschen. Aus dem derart bestimmten Verschleißzustand lässt sich eine Trendlinie bestimmen, so dass abschätzbar ist, wann ein Austausch der Bremsanlage 10 und/oder der Bremssohle 14 erforderlich ist.

Vorbeschriebene Schritte zwei und drei werden ebenso wie Schritt eins automatisiert durch den computerbasierten Server 28 der Bremsanlagenüberwachungsvorrichtung 18 durchgeführt, wobei das Ermitteln der Position der Bremssohle 14 und des Verschleißzustands unterstützt durch Machine-Learning Algorithmen erfolgen. Die Machine-Learning Algorithmen erkennen auf dem Bild 20 als markanten Eckpunkt den Bolzen 32 und führen auf Basis einer intelligenten Kantendetektion und -selektion die Messung der Dicke 34 durch.

Zum Detektieren des Bolzens 32 verwenden die Machine-Learning Algorithmen einen Klassifikator, der auf einer Vielzahl verschiedenartiger Bolzen 32 trainiert wurde. Über die Position des Bolzens 32 wird automatisiert eine Annahme über die Position der Bremssohle 14 getroffen und auf dem entsprechenden Bildausschnitt die Messung der Dicke 34 durchgeführt. Anstelle von Machine-Learning Algorithmen lassen sich auch Verfahren der künstlichen Intelligenz und/oder neuronale Netze verwenden.

Ferner wird durch die Bremsanlagenüberwachungsvorrichtung 18 ein der Bremsanlage 10 zugeordnetes Identifikationskennzeichen, insbesondere eine Wagonnummer, des Schienenfahrzeugs 12 bestimmt. Mittels des Identifikationskennzeichens lässt sich durch den Server 28 bestimmen, welche Art von Bremsanlage 10 an dem Schienenfahrzeug vorgesehen ist. Ebenso lässt sich mittels des Identifikationskennzeichens in einer Datenbank des Servers 28 ein Eintrag über die erfasste Dicke 34 der Bremssohle 14 hinterlegen und/oder der Eintrag durch die erfasste Dicke 34 aktualisieren.

Das beschriebene Ausführungsbeispiel ist lediglich ein Beispiel, das im Rahmen der Ansprüche auf vielfältige Weise modifiziert und/oder ergänzt werden kann. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

- 10: Bremsanlage
- 12: Schienenfahrzeug
- 14: Bremssohle
- 16: Radlauffläche
- 18: Bremsanlagenüberwachungsvorrichtung
- 20: Bild
- 22: Sensorsystem
- 24: Position der Bremssohle
- 26: Speicher
- 28: Server
- 30: Position des Bolzens
- 32: Bolzen
- 34: Dicke der Bremssohle
- 36: Kante
- 38: Auswerteeinrichtung
- 40: Bremsanlagenüberwachungssystem
- 42: Prüfgleis

## Patentansprüche

1. Verfahren zum Überwachen einer Bremsanlage (10) eines Schienenfahrzeugs (12), wobei die Bremsanlage (10) wenigstens eine Bremssohle (14) umfasst, die auf eine Radlauffläche (16) wirkt, umfassend die folgenden, durch eine computerbasierte Bremsanlagenüberwachungsvorrichtung (18) ausgeführten Schritte
Aufnehmen wenigstens eines Bildes (20) umfassend die Bremsanlage (10) des Schienenfahrzeugs (12) mit einem Sensorsystem (22),
Ermitteln einer Position (24) der Bremssohle (14) auf dem wenigstens einen Bild (20) und
Ermitteln eines Verschleißzustands der Bremssohle (14) aus dem wenigstens einen Bild (20).

2. Verfahren zum Überwachen einer Bremsanlage (10) nach dem vorhergehenden Anspruch, mit den Schritten:
Erfassen eines der Bremsanlage (10) zugeordneten Identifikationskennzeichens, insbesondere einer Wagonnummer, und
Übermitteln des Identifikationskennzeichens und des wenigstens einen Bildes (20) an einen Speicher (26) und/oder einen Server (28) zum Ermitteln der Position (24) der Bremssohle (14) auf dem wenigstens einen Bild (20) und zum Ermitteln des Verschleißzustands der Bremssohle (14) aus dem wenigstens einen Bild (20).

3. Verfahren zum Überwachen einer Bremsanlage (10) nach einem der vorhergehenden Ansprüche, wobei das Ermitteln der Position (24) der Bremssohle (14) auf dem wenigstens einen Bild (20) ein Ermitteln einer Position (30) eines Bolzens (32), an dem die Bremssohle (14) befestigt ist, umfasst.

4. Verfahren zum Überwachen einer Bremsanlage (10) nach einem der vorhergehenden Ansprüche, wobei das Ermitteln eines Verschleißzustandes der Bremssohle (14) aus dem wenigstens einen Bild (20) das Ermitteln einer Dicke (34) der Bremssohle (14) umfasst.

5. Verfahren zum Überwachen einer Bremsanlage (10) nach dem vorhergehenden Anspruch, wobei das Ermitteln der Dicke (34) der Bremssohle (14) das Bestimmen wenigstens zweier Kanten (36) der Bremssohle (14) und ein Ermitteln des Abstandes zwischen den wenigstens zwei Kanten (36) der Bremssohle (14) umfasst.

6. Verfahren zum Überwachen einer Bremsanlage (10) nach einem der beiden vorhergehenden Ansprüche, mit dem Schritt:
Vergleichen der Dicke (34) der Bremssohle (14) mit einem Soll-Wert.

7. Verfahren zum Überwachen einer Bremsanlage (10) nach einem der vorhergehenden Ansprüche, wobei das Ermitteln eines Verschleißzustandes der Bremssohle (14) ein Ermitteln von Rissen in der Bremssohle (14) umfasst.

8. Verfahren zum Überwachen einer Bremsanlage (10) nach einem der vorhergehenden Ansprüche, mit dem Schritt:
Berechnen einer Trendlinie des Verschleißzustandes der Bremssohle (14).

9. Verfahren zum Überwachen einer Bremsanlage (10) nach einem der vorhergehenden Ansprüche, wobei das Ermitteln der Position (24) der Bremssohle (14) und das Ermitteln des Verschleißzustands der Bremssohle (14) von einem neuronalen Netzwerk, unterstützt durch künstliche Intelligenz und/oder mittels maschinellen-Lernen durchgeführt wird.

10. Bremsanlagenüberwachungsvorrichtung (18) zur Überwachung einer Bremsanlage (10) eines Schienenfahrzeugs (12) mit wenigstens einer Bremssohle (14), die auf eine Radlauffläche (16) wirkt, umfassend ein Sensorsystem (22) und eine computerbasierte Auswerteeinrichtung (38), wobei die Auswerteeinrichtung (38) ausgeführt ist, wenigstens ein Bild (20) umfassend die Bremsanlage (10) des Schienenfahrzeugs (12) mit dem Sensorsystem (22) aufzunehmen, eine Position (24) der Bremssohle (14) auf dem wenigstens einen Bild (20) zu ermitteln und einen Verschleißzustand der Bremssohle (14) aus dem wenigstens einen Bild (20) zu ermitteln.

11. Bremsanlagenüberwachungssystem (40) umfassend die Bremsanlagenüberwachungsvorrichtung (18) nach dem vorhergehenden Anspruch und ein Prüfgleis (42), wobei das Sensorsystem (22) neben dem Prüfgleis (42) installiert ist.

12. Bremsanlagenüberwachungssystem (40) nach dem vorhergehenden Anspruch, wobei das Sensorsystem (22) bei Vorbeifahrt des Schienenfahrzeugs (12) automatisiert wenigstens ein Bild (20) umfassend die Bremsanlage (10) des Schienenfahrzeugs aufnimmt.
